# EUROPÄISCHE PATENTSCHRIFT

(11) **EP 1 566 310 B1**
(45) Veröffentlichungstag und Bekanntmachung des Hinweises auf die Patenterteilung: **17.01.2007**
(21) Anmeldenummer: 04030928.8
(22) Anmeldetag: 29.12.2004
(51) Int. Cl.: B60R 13/02, B60R 11/02, B60Q 3/02

(54) **Schalterleiste**
Trim with switches
Enjoliveur avec commutateurs

(30) Priorität: 23.02.2004 DE 102004009923
(43) Veröffentlichungstag der Anmeldung: 24.08.2005
(73) Patentinhaber: Valeo Schalter und Sensoren GmbH, 74319 Bietigheim-Bissingen (DE)
(72) Erfinder: Huber, Wolfgang, 74321 Bietigheim-Bissingen (DE); Petzold, Manuel, 74321 Bietigheim (DE); Baumeister, Udo, 74379 Ingersheim (DE)
(74) Vertreter: Dreiss, Fuhlendorf, Steimle & Becker

(56) Entgegenhaltungen:
- GB-A- 246 025
- PATENT ABSTRACTS OF JAPAN Bd. 2000, Nr. 01, 31. Januar 2000 (2000-01-31) & JP 11 278151 A (MATSUSHITA ELECTRIC IND CO LTD), 12. Oktober 1999 (1999-10-12)
- PATENT ABSTRACTS OF JAPAN Bd. 017, Nr. 623 (M-1511), 17. November 1993 (1993-11-17) & JP 05 193399 A (NISSAN MOTOR CO LTD), 3. August 1993 (1993-08-03)

## Beschreibung

Die Erfindung betrifft eine Schalterleiste für ein Kraftfahrzeug mit wenigstens einem mittels eines Bedienelements betätigbaren Schalter, mit wenigstens einem Symbolaufdruck auf der Schalterleiste zur Kennzeichnung einer Schalterstellung und mit wenigstens einem im Bereich des Schalters befindlichen Funktionselement, welches im wesentlichen so weit von der Oberfläche der Schalterleiste abragt, wie das Bedienelement.

Dokument JP-A-05193399 offenbart eine solche Schalterleiste.

Es sind Schalterleisten bekannt, die im Bereich des Armaturenbretts angeordnet sind, und welche Kippschalter, Tastschalter oder Drehschalter tragen. Die Schalter sind mittels eines Bedienelements betätigbar, wobei das Bedienelement in der Regel von der Oberfläche der Schalterleiste abragt. Um im Falle eines Unfalls den Fahrer zu schützen, ragen von der Oberseite beziehungsweise Oberfläche der Schalterleiste noch Funktionselemente ab, die als Prallschutz dienen. Die Funktionselemente befinden sich in unmittelbarer Nachbarschaft zu den Bedienelementen, so dass ein direkter Aufprall auf die Bedienelemente verhindert wird, da die Bedienelemente quasi versenkt zwischen den Funktionselementen angeordnet sind.

Der Erfindung liegt die Aufgabe zugrunde, dem Funktionselement beziehungsweise den Funktionselementen eine weitere Aufgabe beziehungsweise Funktion zuzuschreiben.

Diese Aufgabe wird erfindungsgemäß mit einer Schalterleiste der eingangs genannten Art dadurch gelöst, dass das Funktionselement eine Lichtaustrittsöffnung aufweist und der Austrittskegel der Lichtaustrittsöffnung auf den Symbolaufdruck gerichtet ist.

Die erfindungsgemäße Schalterleiste besitzt demnach ein Funktionselement, welches nicht nur die oben beschriebenen Aufgaben besitzt, nämlich den Schutz des Fahrers vor einem Aufprall auf die Bedienelemente, sondern auch die Aufgabe, den Symbolaufdruck anzuleuchten. Da das Funktionselement sich in unmittelbarer Nähe zum Schalter befindet und in diesem unmittelbaren Umfeld auch der Symbolaufdruck vorgesehen ist, bedarf es keiner starken Lichtquelle und großer Leuchtdichte, um den Symbolaufdruck so zu beleuchten, dass er im Dämmerlicht und bei Nacht gut erkennbar ist. Außerdem kann auf im Bereich des Innenspiegels angeordnete Lichtquellen verzichtet werden, die sich bei Nacht unter Umständen störend auswirken. Ein weiterer Vorteil wird darin gesehen, dass die Schalterleiste im Bereich des Symbolaufdrucks nicht transparent ausgebildet sein muss, was im Falle einer Beleuchtung von hinten, dass heißt bei durchscheinenden Symbolen, der Fall sein müsste.

Bei einer Weiterbildung der Erfindung ist vorgesehen, dass das Funktionselement ein seitlich neben dem Schalter angeordneter Bügel ist. Dieser Bügel hat den Vorteil, dass er elastisch ausgeführt werden kann und dass er sich problemlos von der Oberfläche der Schalterleiste abheben kann und zwar so weit, dass er das Bedienelement des Schalters überragt.

Dabei kann erfindungsgemäß das Funktionselement ein Lichtleiter sein oder einen Lichtleiter aufweisen. Im letzteren Falle ist der Lichtleiter in das Funktionselement integriert, zum Beispiel eingeklipst, eingeklebt, umspritzt oder auf andere Weise befestigt. Im anderen Falle ist der Lichtleiter so geformt, dass er gleichzeitig das Funktionselement bildet.

Dabei ist in bevorzugter Weise das Funktionselement von einem lichtdichten Überzug umgeben. Dieser Überzug, zum Beispiel eine Lackierung, Pulverbeschichtung, ein Kunststoffschlauch oder dergleichen, hat die Aufgabe, dass kein Licht an Stellen aus dem Lichtleiter austritt, an denen dies nicht gewünscht ist oder sich das Licht störend auswirken könnte.

Die Lichtaustrittsöffnung wird durch eine Öffnung im Überzug gebildet, wobei der Lichtleiter in diesem Bereich enden kann oder der Lichtleiter in diesem Bereich einen Lichtaustritt, dass heißt eine Lichtauskopplung in Form einer Einfräsung oder dergleichen aufweist. Die Lichtaustrittsöffnung ist dabei so positioniert, dass das Licht in Form eines Kegels auf den Symbolaufdruck beziehungsweise auf mehrere Symbolaufdrucke auftrifft.

Um den Betrachter beziehungsweise den Fahrer nicht zu stören, ist die Lichtaustrittsöffnung an einer vom Betrachter abgewandten Seite angeordnet oder zum Fahrer hin abgeschattet.

Bei einem als Bügel ausgebildeten Funktionselement befindet sich erfindungsgemäß die Lichtaustrittsöffnung an der Krümmungsinnenseite des Bügels. Dies hat außerdem den Vorteil, dass die Lichtaustrittsöffnung vor Verschmutzung geschützt ist.

Bei einem Ausführungsbeispiel wird der Lichtleiter von einer innerhalb der Schalterleiste angeordneten Lichtquelle angestrahlt. Dies hat den Vorteil, dass die Lichtquelle zum Beispiel in Form einer LED auf einer innerhalb der Schalterleiste vorgesehenen Platine befestigt sein kann, wobei eine einzige LED auch mehrere Lichtleiter mit Licht versorgen kann.

Um das Licht gezielt an den gewünschten Ort, dass heißt an den Symbolaufdruck zu lenken, ist die Lichtaustrittsöffnung mit einem Prisma, einer Linse, einem Spiegel oder dergleichen versehen. Auf diese Weise kann das Licht exakt an die Stelle gelenkt werden, die beleuchtet werden soll.

Weitere Vorteile, Merkmale und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten und in den Ansprüchen sowie in der Beschreibung erwähnten Merkmale jeweils einzeln für sich oder in beliebiger Kombination erfindungswesentlich sein.

### In der Zeichnung zeigen:

- Figur 1: eine perspektivische Ansicht einer teilweise aufgebrochnen Schalterleiste;
- Figur 2: einen Ausschnitt aus einer Schalterleiste mit einem aufgeschnittenen Bügel;
- Figur 3: den Strahlengang innerhalb des Bügels und den Lichtkegel in schematischer Darstellung, und
- Figur 4: einen Schnitt IV- IV gemäß Figur 3 durch den Bügel.

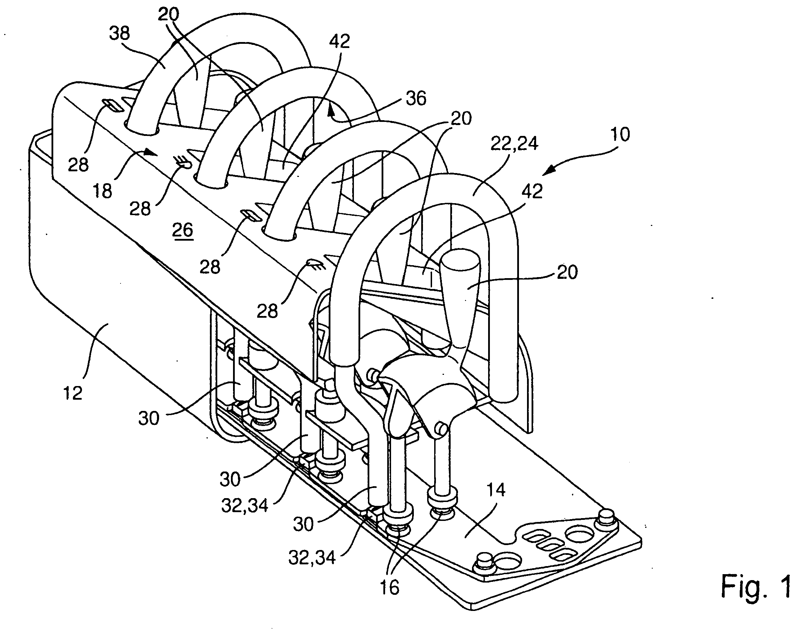

Die Figur 1 zeigt eine insgesamt mit 10 bezeichnete Schalterleiste, wie sie z.B. in ein Armaturenbrett, eine Türverkleidung oder dergleichen eines Kraftfahrzeugs eingebaut wird. Die Schalterleiste 10 besitzt ein versenkbares Gehäuse 12, in welchem unter anderem die Schaltermimik und eine Platine 14 untergebracht sind, auf der elektronische Bauteile 16 befestigt sind.

Einem Betrachter ist eine Oberseite 18 zugewandt, aus welcher Bedienelemente 20 austreten, mit denen Schalter oder Taster betätigt werden können. Um die Bedienperson bei einem Aufprall zu schützen, sind seitlich neben den Bedienelementen 20 Funktionselemente 22 in Form von Bügeln 24 angeordnet, die die Oberfläche 26 der Oberseite 18 ebenfalls überragen. Die Bügel 24 dienen also als Aufprallschutz. Seitlich neben den Funktionselementen 22 sind auf der Oberseite 18 Symbolaufdrucke 28 angeordnet, mit denen Stellungen der Bedienelemente 20 symbolhaft bezeichnet werden.

Innerhalb des Gehäuses 12 sind Lichtleiter 30 zu erkennen, die stirnseitig von Lichtquellen 32, insbesondere von LED 34 angestrahlt werden. Diese LED 34 sind ebenfalls auf der Platine 14 angeordnet. Die Lichtleiter 30 münden jeweils in ein Ende der Funktionselemente 22 ein und erstrecken sich innerhalb der Funktionselemente 22 zumindest bis in den Bereich der Symbolaufdrucke 28. Dabei kann der Lichtleiter 30 in eine an der Krümmungsinnenseite 36 des Bügels 24 vorgesehene Freisparung eingeklipst, einklebt, eingespritzt oder auf andere Weise befestigt sein. Es besteht jedoch auch die Möglichkeit, dass der Bügel 24 vom Lichtleiter 30 selbst gebildet wird, wobei der Lichtleiter 30 dann noch einen lichtdichten beziehungsweise nicht transparenten Überzug 38 aufweist.

Im Bereich der Symbolaufdrucke 28 besitzt das Funktionselement 22, insbesondere der Überzug 38 wenigstens eine Lichtaustrittsöffnung 40, aus welcher Licht, welches von der Lichtquelle 32 in den Lichtleiter 30 eingestrahlt wurde, austritt und in Form eines Austrittskegels 42 auf den Symbolaufdruck 28 auftrifft. Dadurch wird der Symbolaufdruck 28 beleuchtet.

Die Lichtaustrittsöffnung 40 ist also im Bereich der Krümmungsinnenseite 36 angeordnet, was den Vorteil hat, dass sie vom Betrachter nicht sichtbar ist. Das aus der Lichtaustrittsöffnung 40 austretende Licht wirkt sich also nicht störend auf den Betrachter, insbesondere den Fahrer eines Fahrzeugs aus.

Insbesondere besitzen die Funktionselemente 22 mehrere Lichtaustrittsöffnungen, über welche das Licht in Form von mehreren Austrittskegeln 42 austritt und Symbolaufdrucke 28 beleuchtet.

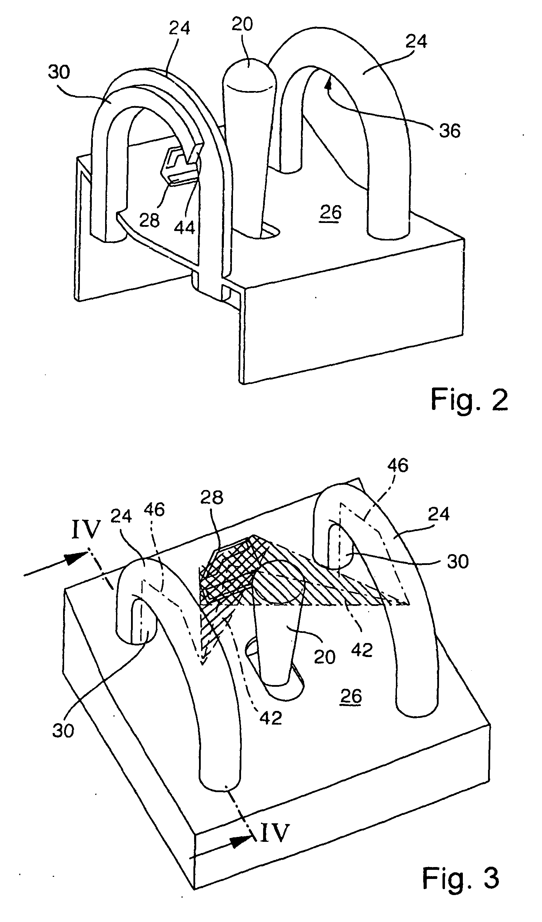

In der Figur 2, die eine Ausführungsbeispiel der Erfindung zeigt, ist deutlich erkennbar, dass der Lichtleiter 30 in die Unterseite des Bügels 24, d.h. an der Krümmungsinnenseite 36 in den Bügel 24 eingelegt und mit geeigneten Mitteln fixiert ist. Der Lichtaustritt befindet sich am Ende 44 des Lichtleiters 30, wobei der Lichtaustritt so geformt ist, dass das Licht in Form eines Kegels den Lichtleiter 30 verlässt und auf den Symbolaufdruck 28 auftrifft. Die ist in Figur 3 dargestellt, wobei mit dem Bezugszeichen 46 der Strahlengang innerhalb des Lichtleiter 30 bezeichnet ist.

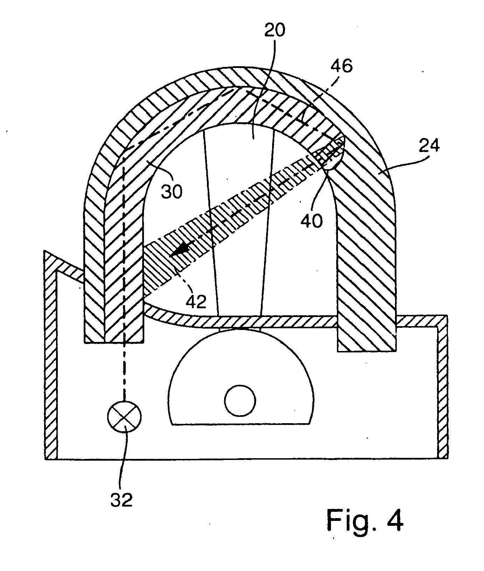

Aus Figur 4 ist deutlich nochmals der Strahlengang 46 des Lichtes von der Lichtquelle 32 ausgehend, durch den Lichtleiter 30 hindurch, aus der Lichtaustrittsöffnung 40 heraus und in den Austrittskegel 42 mündend erkennbar. Das von der Lichtquelle 32 entfernte Ende des Lichtleiters 30 ist insbesondere verspiegelt ausgeführt und besitzt eine derartige Abschrägung, dass das Licht in Form des Austrittskegel 42 genau auf den Symbolaufdruck 28 auftrifft.

## Patentansprüche

1. Schalterleiste (10) für ein Kraftfahrzeug mit wenigstens einem mittels eines Bedienelements (20) betätigbaren Schalter, mit wenigstens einem Symbolaufdruck (28) auf der Schalterleiste (10) zur Kennzeichnung einer Schalterstellung und mit wenigstens einem im Bereich des Schalters befindlichen Funktionselement (22), welches im wesentlichen so weit von der Oberfläche (26) der Schalterleiste (10) abragt wie das Bedienelement (20), **dadurch gekennzeichnet, dass** das Funktionselement (22) eine Lichtaustrittsöffnung (40) aufweist und der Austrittskegel (42) der Lichtaustrittsöffnung (40) auf den Symbolaufdruck (28) gerichtet ist.

2. Schalterleiste nach Anspruch 1, **dadurch gekennzeichnet, dass** das Funktionselement (22) ein seitlich neben dem Schalter angeordneter Bügel (24) ist.

3. Schalterleiste nach einem der vorherigen Ansprüche, **dadurch gekennzeichnet, dass** das Funktionselement (22) ein Lichtleiter (30) ist oder einen Lichtleiter (30) aufweist.

4. Schalterleiste nach Anspruch 3, **dadurch gekennzeichnet, dass** das Funktionselement (22) einen lichtdichten Überzug (38) aufweist.

5. Schalterleiste nach Anspruch 4, **dadurch gekennzeichnet, dass** der Überzug (38) die Lichtaustrittsöffnung (40) aufweist.

6. Schalterleiste nach einem der vorherigen Ansprüche, **dadurch gekennzeichnet, das**s die Lichtaustrittsöffnung (40) an einer vom Betrachter abgewandten Seite angeordnet ist.

7. Schalterleiste nach Anspruch 2, **dadurch gekennzeichnet, dass** die Lichtaustrittsöffnung (40) an der Krümmungsinnenseite (36) des Bügels (24) angeordnet ist.

8. Schalterleiste nach einem der Ansprüche 3 bis 7, **dadurch gekennzeichnet, dass** der Lichtleiter (30) von einer innerhalb der Schalterleiste (10) angeordneten Lichtquelle (32), insbesondere einer LED (34), angestrahlt wird.

9. Schalterleiste nach einem der vorherigen Ansprüche, **dadurch gekennzeichnet, dass** die Lichtaustrittsöffnung (40) mit einem Prisma, einer Linse, einem Spiegel oder dergleichen versehen ist.

## Claims

1. Switch panel (10) for a motor vehicle, comprising at least one switch which can be operated by means of a control element (20), comprising at least one symbol imprint (28) on the switch panel (10) for characterizing a switch position and comprising at least one functional element (22) which is present in the region of the switch and projects substantially as far from the surface (26) of the switch panel (10) as the control element (20) **characterized in that** the functional element (22) has a light exit opening (40) and the exit cone (42) of the light exit opening (40) is directed towards the symbol imprint (28).

2. Switch panel according to Claim 1, **characterized in that** the functional element (22) is a bow (24) arranged next to the switch.

3. Switch panel according to either of the preceding Claims, **characterized in that** the functional element (22) is an optical fibre (30) or has an optical fibre (30).

4. Switch panel according to Claim 3, **characterized in that** the functional element (22) has a light-tight covering (38).

5. Switch panel according to Claim 4, **characterized in that** the covering (38) has the light exit opening (40).

6. Switch panel according to any of the preceding Claims, **characterized in that** the light exit opening (40) is arranged on a side facing away from the observer.

7. Switch panel according to Claim 2, **characterized in that** the light exit opening (40) is arranged on the curved inside (36) of the bow (24).

8. Switch panel according to any of Claims 3 to 7, **characterized in that** light from a light source (32), in particular an LED (34), arranged inside the switch panel (10) is incident on the optical fibre (30).

9. Switch panel according to any of the preceding Claims, **characterized in that** the light exit opening (40) is provided with a prism, a lens, a mirror or the like.

## Revendications

1. Réglette de connexion (10) pour un véhicule automobile, comportant au moins un commutateur apte à être actionné par un élément de commande (20), comportant au moins un symbole (28) imprimé sur la réglette de connexion (10) pour identifier une position de commutation et comportant au moins un élément fonctionnel (22), qui est situé dans la zone du commutateur et qui s'avance en saillie sur la surface (26) de la réglette de connexion (10), sensiblement sur la même distance que l'élément de commande (20), **caractérisée en ce que** l'élément fonctionnel (22) comporte un orifice de sortie de lumière (40) et le cône de sortie (42) de l'orifice de sortie de lumière (40) est orienté sur le symbole (28).

2. Réglette de connexion selon la revendication 1, **caractérisée en ce que** l'élément fonctionnel (22) est un arceau (24) situé latéralement à côté du commutateur.

3. Réglette de connexion selon l'une quelconque des revendications précédentes, **caractérisée en ce que** l'élément fonctionnel (22) est une fibre optique (30) ou comporte une fibre optique (30).

4. Réglette de connexion selon la revendication 3, **caractérisée en ce que** l'élément fonctionnel (22) comporte une gaine (38) étanche à la lumière.

5. Réglette de connexion selon la revendication 4, **caractérisée en ce que** la gaine (38) comporte l'orifice de sortie de lumière (40).

6. Réglette de connexion selon l'une quelconque des revendications précédentes, **caractérisée en ce que** l'orifice de sortie de lumière (40) est agencé sur un côté détourné de l'observateur.

7. Réglette de connexion selon la revendication 2, **caractérisée en ce que** l'orifice de sortie de lumière (40) est agencé sur le côté intérieur de la courbure (36) de l'arceau (24).

8. Réglette de connexion selon l'une quelconque des revendications 3 à 7, **caractérisée en ce que** la fibre optique (30) est illuminée par une source lumineuse (32), en particulier une diode électroluminescente (34), disposée à l'intérieur de la réglette de connexion (10).

9. Réglette de connexion selon l'une quelconque des revendications précédentes, **caractérisée en ce que** l'orifice de sortie de lumière (40) est muni d'un prisme, d'une lentille, d'un miroir ou autre élément similaire.
